(19) Europäisches Patentamt / European Patent Office / Office européen des brevets

(11) **EP 3 667 639 A1**

(12) **EUROPEAN PATENT APPLICATION**
published in accordance with Art. 153(4) EPC

(43) Date of publication:
**17.06.2020 Bulletin 2020/25**

(21) Application number: **18843059.9**

(22) Date of filing: **03.08.2018**

(51) Int Cl.:
*G08G 1/16* (2006.01)      *B60R 21/00* (2006.01)
*B60W 30/095* (2012.01)    *B60W 30/14* (2006.01)
*G01C 21/26* (2006.01)

(86) International application number:
**PCT/JP2018/029237**

(87) International publication number:
**WO 2019/031407 (14.02.2019 Gazette 2019/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.08.2017 JP 2017153423**

(71) Applicant: **Pioneer Corporation**
**Tokyo 113-0021 (JP)**

(72) Inventors:
• **SUZUKI, Yasunori**
**Kawagoe-shi**
**Saitama 350-8555 (JP)**

• **SOMA, Takayuki**
**Kawagoe-shi**
**Saitama 350-8555 (JP)**
• **MURATA, Kazuo**
**Kawagoe-shi**
**Saitama 350-8555 (JP)**
• **KAWAGISHI, Yuya**
**Kawagoe-shi**
**Saitama 350-8555 (JP)**
• **KAWAMURA, Hiroshi**
**Kawagoe-shi**
**Saitama 350-8555 (JP)**

(74) Representative: **Viering, Jentschura & Partner mbB**
**Patent- und Rechtsanwälte**
**Am Brauhaus 8**
**01099 Dresden (DE)**

(54) **DETERMINATION DEVICE, DETERMINATION METHOD, AND PROGRAM**

(57) The determination device determines traveling risk before a mobile object actually turns left or right at an intersection. Specifically, the determination device acquires speed information associated with a moving speed of the mobile object, and acquires intersection information including a shape of the intersection. Next, the determination device predicts a traveling track of the mobile object traveling in the intersection based on the speed information and the intersection information. Then, the determination device determines the traveling risk based on the traveling track.

FIG. 2

**Description**

TECHNICAL FIELD

The present invention relates to a technique of determining risk at the time of turning left or right at an intersection.

BACKGROUND TECHNIQUE

There is known a technique of stabilizing a travelling vehicle at curves. For example, Patent Reference 1 discloses calculating the lateral acceleration generated on a vehicle while travelling a curve in a road based on a curve shape in map information and a current vehicle speed, determining whether or not the vehicle can stably pass the curve based on the lateral acceleration before and after entering the curve, and switching the setting of the vehicle stabilization control device based on the determination result.

PRIOR ART REFERENCES

PATENT REFERENCES

Patent Reference 1: Japanese Patent Application Laid-Open under No. 2010-105453

SUMMARY OF THE INVENTION

PROBLEM TO BE SOLVED BY THE INVENTION

In comparison with curves, a track of a vehicle passing an intersection is highly free, and the vehicle may travel in various tracks. Since traveling risk may change depending on the track of the vehicle at the time of left/right turn at the intersection, it is difficult to determine the traveling risk before entering the intersection.
The above is an example of the problem to be solved by the present invention. It is an object of the present invention to appropriately predict a track of a vehicle traveling an intersection and determine traveling risk.

MEANS FOR SOLVING THE PROBLEM

An invention described in claims is a determination device which determines traveling risk before a mobile object actually turns left or right in an intersection, comprising: a first acquisition unit configured to acquire speed information associated with a moving speed of the mobile object; a second acquisition unit configured to acquire intersection information including a shape of the intersection; a prediction unit configured to predict a traveling track of the mobile object traveling in the intersection based on the speed information and the intersection information; and a risk determination unit configured to determine the traveling risk based on the traveling track.
Another invention described in claims is a determination method which determines traveling risk before a mobile object actually turns left or right in an intersection, comprising: a first acquisition process configured to acquire speed information associated with a moving speed of the mobile object; a second acquisition process configured to acquire intersection information including a shape of the intersection; a prediction process configured to predict a traveling track of the mobile object traveling in the intersection based on the speed information and the intersection information; and a risk determination process configured to determine the traveling risk based on the traveling track.
Another invention described in claims is a program executed by a determination device which includes a computer and determines traveling risk before a mobile object actually turns left or right in an intersection, the program causing the computer to function as : a first acquisition unit configured to acquire speed information associated with a moving speed of the mobile object; a second acquisition unit configured to acquire intersection information including a shape of the intersection; a prediction unit configured to predict a traveling track of the mobile object traveling in the intersection based on the speed information and the intersection information; and a risk determination unit configured to determine the traveling risk based on the traveling track.

BRIEF DESCRIPTION OF THE DRAWINGS

FIG. 1 is a block diagram showing a configuration of a navigation device according to an embodiment.
FIG. 2 is a flowchart of warning processing according to the embodiment.

FIG. 3 is a flowchart of track prediction processing.

FIGS. 4A and 4B show examples of setting a start point and an end point of a predicted track.

FIG. 5 is a flowchart of traveling risk determination processing.

FIG. 6 is a flowchart of traveling risk determination processing.

FIGS. 7A and 7B show examples of setting a determination position.

FIG. 8 is a diagram explaining resultant acceleration at the determination position.

FIG. 9 shows an example of the end point of the predicted track according to a modified example.

FIG. 10 shows an example of setting the determination position according to a modified example.

## DETAILED DESCRIPTION OF THE PREFERRED EMBODIMENTS

According to one aspect of the present invention, there is provided a determination device which determines traveling risk before a mobile object actually turns left or right in an intersection, comprising: a first acquisition unit configured to acquire speed information associated with a moving speed of the mobile object; a second acquisition unit configured to acquire intersection information including a shape of the intersection; a prediction unit configured to predict a traveling track of the mobile object traveling in the intersection based on the speed information and the intersection information; and a risk determination unit configured to determine the traveling risk based on the traveling track.

The above determination device determines traveling risk before a mobile object actually turns left or right in an intersection. The determination device acquires speed information associated with a moving speed of the mobile object, and acquires intersection information including a shape of the intersection. Next, the determination device predicts a traveling track of the mobile object traveling in the intersection based on the speed information and the intersection information. Then, the determination device determines the traveling risk based on the traveling track. By predicting the traveling track of the mobile object in the intersection, it becomes possible to accurately determine the traveling risk.

In one mode of the above determination device, the prediction unit sets a start point and an end point of the traveling track based on the speed information and the intersection information, and predicts the traveling track between the start point and the end point as a curve including a transition curve. By this, it becomes possible to predict the traveling track close to an actual traveling track.

In another mode of the above determination device, the prediction unit sets the positions of the start point and the end point specified based on the intersection information after correcting based on the speed information. By this, it becomes possible to set appropriate positions of the start point and the end point according to the speed of the mobile object. Preferably, the prediction unit corrects the positions of the start point and the end point to be farther from the intersection as the speed information indicates a higher speed.

In a preferred example, the transition curve is a clothoid curve.

Still another mode of the above determination device further comprises a setting unit configured to set a determination position on the traveling track, and the determination unit predicts a lateral acceleration generated in a lateral direction of the mobile object at the determination position, and determines the traveling risk of the mobile object turning left or right based on the lateral acceleration. Thus, the traveling risk at a certain determination position may be determined. In a preferred example, the setting unit sets a position where an opposite lane or a crosswalk in the intersection crosses the traveling track as the determination position.

According to another aspect of the present invention, there is provided a determination method which determines traveling risk before a mobile object actually turns left or right in an intersection, comprising: a first acquisition process configured to acquire speed information associated with a moving speed of the mobile object; a second acquisition process configured to acquire intersection information including a shape of the intersection; a prediction process configured to predict a traveling track of the mobile object traveling in the intersection based on the speed information and the intersection information; and a risk determination process configured to determine the traveling risk based on the traveling track. According to this method, by predicting the traveling track of the mobile object in the intersection, it becomes possible to accurately determine the traveling risk.

According to still another aspect of the present invention, there is provided a program executed by a determination device which includes a computer and determines traveling risk before a mobile object actually turns left or right in an intersection, the program causing the computer to function as: a first acquisition unit configured to acquire speed information associated with a moving speed of the mobile object; a second acquisition unit configured to acquire intersection information including a shape of the intersection; a prediction unit configured to predict a traveling track of the mobile object traveling in the intersection based on the speed information and the intersection information; and a risk determination unit configured to determine the traveling risk based on the traveling track. By executing this program by a computer, the above determination device can be realized. This program may be handled in a manner stored in a storage medium.

EMBODIMENTS

A Preferred embodiment of the present invention will be described below with reference to the attached drawings.

[Navigation Device]

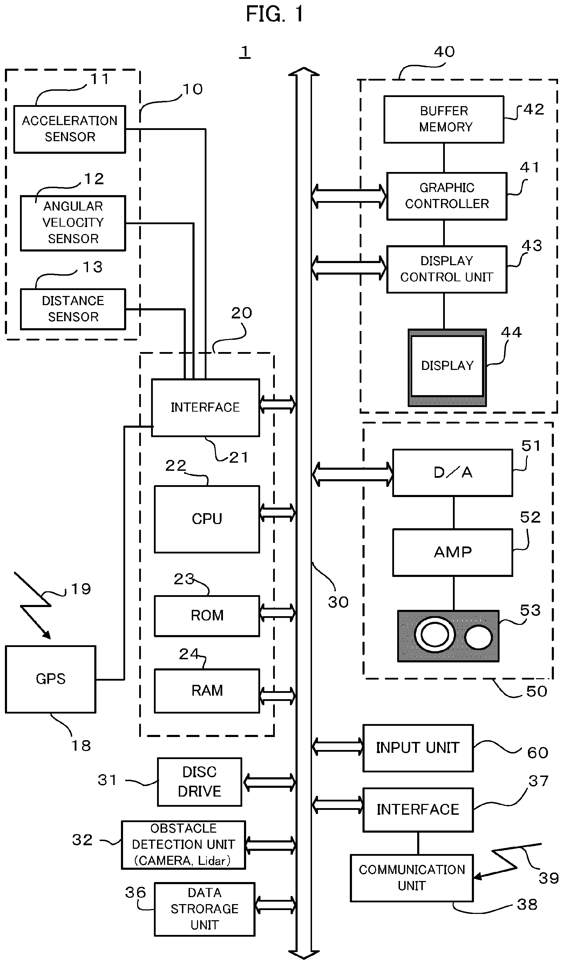

FIG. 1 shows a configuration of a navigation device 1 according to an embodiment of the present invention. As shown in FIG. 1, the navigation device 1 includes a stand-alone position measurement device 10, a GPS receiver 18, a system controller 20, a disc drive 31, an obstacle detection unit 32, a data storage unit 36, a communication interface 37, a communication device 38, a display unit 40, a sound output unit 50, and an input device 60.

The system controller 20, the disc drive 31, the obstacle detection unit 32, the data storage unit 36, the communication interface 37, the display unit 40, the sound output unit 50 and the input device 60 are connected with each other by a bus line 30.

The stand-alone position measurement device 10 includes an acceleration sensor 11, an angular velocity sensor 12 and a distance sensor 13. The acceleration sensor 11 includes a piezoelectric element, for example, and detects the acceleration degree of the vehicle and outputs the acceleration data. The angular velocity sensor 12 includes a vibration gyroscope, for example, and detects the angular velocity of the vehicle at the time of changing the direction of the vehicle and outputs the angular velocity data and the relative direction data. The distance sensor 13 measures vehicle speed pulses including a pulse signal generated with the wheel rotation of the vehicle.

The GPS receiver 18 receives an electric wave 19 for sending downlink data including position measurement data from plural GPS satellites. The position measurement data is used for detecting the absolute position of the vehicle (hereinafter referred to as "current position") from longitude and latitude information.

The system controller 20 includes an interface 21, a CPU (Central Processing Unit) 22, a ROM (Read Only Memory) 23 and a RAM (Random Access Memory) 24, and controls the entire navigation device 1.

The interface 21 executes the interface operation with the acceleration sensor 11, the angular velocity sensor 12, the distance sensor 13 and the GPS receiver 18. Then, the interface 21 inputs the vehicle speed pulse, the acceleration data, the relative direction data, the angular velocity data, the GPS measurement data and the absolute direction data into the system controller 20.

The CPU 22 controls the entire system controller 20. The ROM 23 includes a non-volatile memory (not shown) in which a control program for controlling the system controller 20 is stored. The RAM 24 readably stores various kinds of data such as route data preset by the user via the input device 60, and supplies a working area to the CPU 22.

The disc drive 31 reads contents data such as sound data and video data from a disc not shown, such as a CD and a DVD not shown, to output the contents data to the display unit 40 and/or the sound output unit 50.

The obstacle detection unit 32 may be a camera or a Lidar (Light Detection and Ranging), for example, and detects obstacles around a vehicle, particularly obstacles existing ahead of the vehicle. The obstacles include ground objects such as buildings, and movable bodies such as vehicles and pedestrians.

The data storage unit 36 includes HDD, for example, and stores various kinds of data used for a navigation process such as map data and facility data. The communication device 38 performs wireless communication with a server 7 via a network. Also, the communication device 38 receives surrounding traffic information related to traffic situation around the vehicle by road-to-vehicle communication and/or vehicle-to-vehicle communication.

The display unit 40 displays various kinds of display data on a display device such as a display under the control of the system controller 20. The display unit 40 displays, on a display screen such as a display, the map data read from the data storage unit 36 by the system controller 20. The display unit 40 includes a graphic controller 41 for controlling the entire display unit 40 on the basis of the control data sent from the CPU 22 via the bus line 30, a buffer memory 42 having a memory such as a VRAM (Video RAM) for temporarily storing immediately displayable image information, a display control unit 43 for controlling a display 44 such as a liquid crystal and a CRT (Cathode Ray Tube) on the basis of the image data outputted from the graphic controller 41, and the display 44. The display 44 functioning as an image display unit is formed by a liquid crystal display device of the opposite angle 5-10 inches, and is mounted in the vicinity of a front panel of the vehicle.

The sound output unit 50 includes a D/A converter 51 for executing D/A conversion of the sound digital data sent from the disc drive 31 or the RAM 24 via the bus line 30 under the control of the system controller 20, an amplifier (AMP) 52 for amplifying a sound analog signal outputted from the D/A converter 51, and a speaker 53 for converting the amplified sound analog signal into the sound and outputting it to the vehicle compartment.

The input device 60 includes keys, switches, buttons, a remote controller and a sound input device, which are used for inputting various kinds of commands and data. The input device 60 is arranged in the vicinity of a front panel or the display 44 of a main body of an on-vehicle electric system loaded on the vehicle. Additionally, in such a case that the display 44 is in a touch panel system, a touch panel provided on the display screen of the display 44 functions as the input device 60, too.

In the above configuration, the system controller is an example of a first acquisition unit, a second acquisition unit, a prediction unit, a determination unit and a setting unit.

[Warning Processing]

Next, warning processing according to this embodiment will be described. The warning processing is to determine traveling risk at a certain position in or around the intersection in advance when the vehicle travels in the intersection, and output warning if necessary.

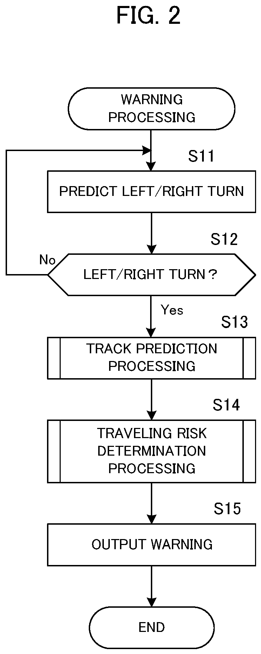

FIG. 2 is a flowchart of the warning processing. This processing is realized by the system controller 20 (hereinafter simply referred to as "controller 20") in the navigation device 1 shown in FIG. 1 which executes a program prepared in advance.

First, the controller 20 predicts left or right turn of the vehicle in the intersection (step S11). Namely, the controller 20 predicts whether the vehicle on which the navigation device 1 is loaded turns left or right at the next intersection. Some methods can be used as a method of predicting the left or right turn. In a first method, when a traveling route to the destination has been set, the controller 20 predicts whether the vehicle will turn left or right at the next intersection based on the set traveling route.

In a second method, the controller 20 predicts the left or right turn based on the presence/absence of the instruction to the vehicle blinker (direction indicator) and the current position of the vehicle. Specifically, when the left or right direction is indicated by the direction indicator while the vehicle is traveling on a road having one lane on each side, the controller 20 predicts that the vehicle will turn to the indicated direction. In a third method, the controller 20 predicts the left or right turn based on map information and the current position of the vehicle. Specifically, when the vehicle is traveling on an exclusive-use lane for right turn or an exclusive-use lane for left turn of a certain road, the controller predicts that the vehicle will turn left or right. It is noted that the first to third methods may be used in combination.

When it is not predicted that the vehicle will turn left or right (step S12: No), the controller 20 repeats step S11. On the contrary, when it is predicted that the vehicle will turn left orright (stepS12: Yes), the controller 20 executes trackprediction processing (step S13).

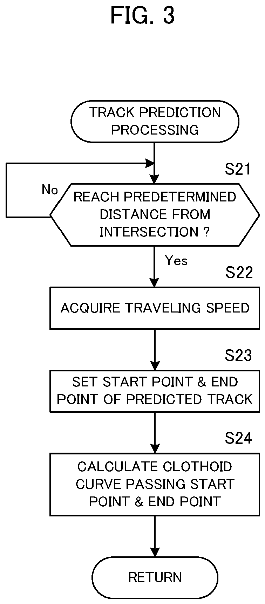

The track prediction processing is to predict the track of the vehicle turning left or right at the intersection. Specifically, the track prediction processing is to calculate a transition curve indicating the track of the vehicle. FIG. 3 is a flowchart of the track prediction processing. First, the controller 20 determines whether or not the vehicle reaches to a point of a predetermined distance from the next intersection (step S21).

When the vehicle reaches the point of predetermined distance from the intersection (step S21: Yes), the controller 20 acquires the traveling speed of the vehicle (step S22). In this case, the controller 20 basically acquires the traveling speed of the vehicle at that time, and uses the acquired speed as the supposed traveling speed in the intersection. Namely, it is supposed that the vehicle travels and passes the intersection with keeping the traveling speed.

However, the controller 20 may acquire the changing rate of the traveling speed of the vehicle so far, and may predict the traveling speed in the intersection in consideration of the acquired changing rate. Specifically, the controller 20 accumulates the traveling speed data before entering the intersection, and calculates the changing rate of the traveling speed. Then, the controller 20 predicts the traveling speed in the intersection by applying the changing rate to the traveling speed acquired in step S22. Since the vehicle normally decelerates when it approaches the intersection, the change of the traveling speed is deceleration. Therefore, if the changing rate of the traveling speed is considered, the controller 20 predicts the speed lower than the traveling speed acquired in step S22 as the traveling speed in the intersection.

When the traveling speed in the intersection is predicted, the controller 20 sets the start point and the end point of the predicted track (step S23). The "predicted track" is a track that the vehicle is supposed to draw when the vehicle turns left or right in the intersection. Specifically, the controller 20 sets the start point and the end point of the predicted track based on the current position of the vehicle, the map information (shape of the intersection) and the traveling speed.

Specifically, first the controller 20 sets an initial position of the start point of the predicted track based on the current position of the vehicle and the road information (the direction of the road, the number of lanes, the road width or else) of the road on which the vehicle is traveling. For example, the controller 20 sets the point where the vehicle enters the intersection on the traveling road to the initial position of the start point of the predicted track. Since the range of the intersection may be defined based on the center position (coordinates) of the intersection and the width of the road that crosses the traveling road, the controller 20 may determine the point where the currently-traveling road crosses the range of the intersection, and may determine the point as the start point.

Next, the controller 20 sets an initial position of the end point of the predicted track based on the road information (the direction of the road, the number of lanes, the road width or else) of the road ahead of intersection. For example, the controller 20 sets the point, where the vehicle exits the intersection on the road after turning left or right, to the initial position of the end point of the predicted track. As described above, since the range of the intersection may be defined based on the center position (coordinates) of the intersection and the width of the road that crosses the traveling road, the controller 20 may determine the point where the road after turning left or right crosses the range of the intersection, and may determine the point as the end point.

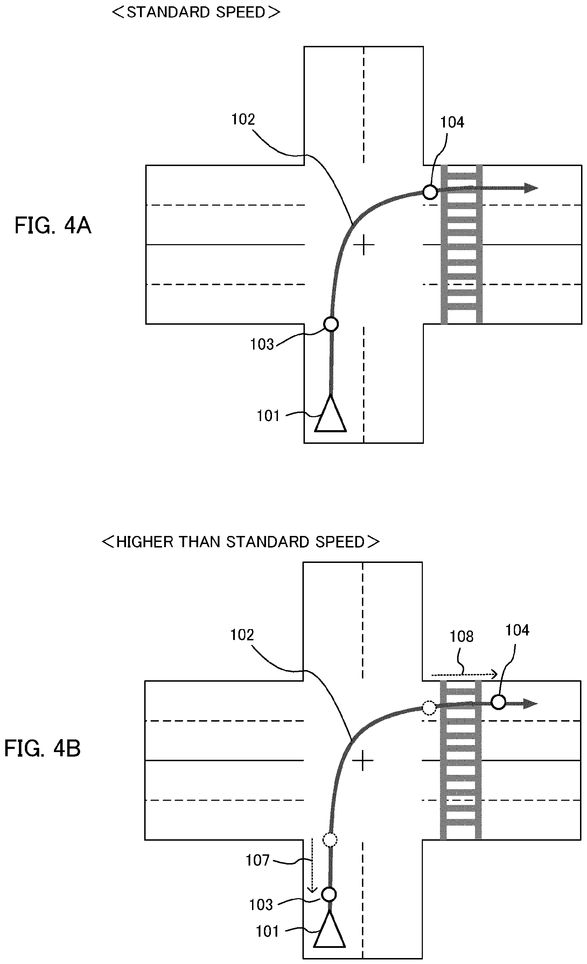

FIG. 4A shows a setting example of the start point and the end point of the predicted track in a case where the vehicle is traveling at a standard speed. As shown by the own vehicle position mark 101, the vehicle enters the intersection from the lower direction of the FIG. 4A, and turns right at the intersection. The point 103 where the vehicle enters the intersection is set as the initial position of the start point, and the point 104 where the vehicle exits the intersection after the right turn is set as the initial position of the end point.

The start point and the end point of the predicted track are set at the positions corresponding to the positions of the vehicle when the vehicle travels the intersection at the standard speed. While the start point and the end point of the predicted track are set on the circumference of the intersection range in the above example, they may be set at the positions a predetermined distance apart from the intersection instead. Specifically, the start point and the end point of the predicted track may be set at the positions a predetermined distance apart from the intersection node in the map information. Also, the positions of the start point and the end point may be stored in the map information in advance.

When the start point and the end point of the predicted track are set in this way, the controller 20 corrects the initial positions of the start point and the end point along the direction of each road based on the traveling speed of the vehicle predicted in step S22. Specifically, the controller 20 moves the start point to the father point from the intersection before entering the intersection and moves the end point to the farther point from the intersection after passing the intersection, as the traveling speed is higher. This is because, as the traveling speed increases, the vehicle becomes difficult to make a small turn and passes the intersection with a large track. In that case, the driver needs to start turning the steering wheel at the farther point from the intersection before entering the intersection and finish returning the steering wheel at the farther point from the intersection after passing the intersection. FIG. 4B shows an example of correcting the start point and the end point of the predicted track when the vehicle speed is higher than the standard speed. In this example, since the traveling speed of the vehicle predicted in step S22 is faster than the standard speed, the start point 103 is moved to the far side from the intersection before entering the intersection as shown by the arrow 107, and the end point 104 is moved to the far side from the intersection after passing the intersection as shown by the arrow 108.

In this way, the start point and the endpoint of the predicted track are appropriately corrected in accordance with the traveling speed of the vehicle. The initial positions and correction amounts of the start point and the end point of the predicted track may be suitably set, based on experimental results of investigating actual vehicle behavior, such that the starting position of turning the steering wheel and the ending position of returning the steering wheel by the driver approach the actual positions.

Instead of or in addition to the above correction based on the traveling speed, the start point and the end point of the predicted track may be corrected based on the traveling tendency of the actual driver. Specifically, the traveling tendency of the driver in left/right turn, concretely the starting position of turning the steering wheel and the ending position of returning the steering wheel (e.g., how many meters before the intersection the driver started turning the steering wheel) may be analyzed based on the past traveling history data of the driver, and the start point and the end point of the predicted track may be corrected based on the result. Thus, it becomes possible to obtain the predicted tracks adapted to the drivers of various traveling tendency, such as the driver who starts turning the steering wheel early or late when turning left or right in the intersection.

Next, the controller 20 calculates a clothoid curve which passes the start point and the end point set in step S23 (step S24). The clothoid curve is an example of a transition curve, and indicates a track that the vehicle travels when the steering wheel is turned at a constant angular velocity. Normally, when the driver operates the steering wheel smoothly in a curved road, the track of the vehicle includes a clothoid curve. Namely, here the controller 20 predicts the track of the vehicle when the driver performs natural driving operation.

Specifically, the clothoid curve here includes a track that the vehicle draws when the driver is turning the steering wheel and a track that the vehicle draws when the driver is returning the steering wheel. For example, when the angle of the intersection is 90 degrees, typically the rotation of the vehicle direction up to 45 degrees is the clothoid curve of turning the steering wheel at a constant speed, and the rotation of the vehicle direction thereafter is the clothoid curve of returning the steering wheel at a constant speed. Further, supposing the the traveling speed of the vehicle is constant, the clothoid curve of turning the steering wheel and the clothoid curve of returning the steering wheel have linearly symmetrical shapes. Namely, by supposing that the traveling speed of the vehicle in the intersection is constant, it is possible to uniquely calculate the clothoid curve whichpasses the start point and the end point of the set predicted track.

For an intersection where the angle of left or right turn becomes an acute angle, a circular arc indicating the track when the angle of the steering wheel is kept at a constant angle may be inserted between the clothoid curve of turning the steering wheel at a constant speed and the clothoid curve of returning the steering wheel at a constant speed. In that case, the length of the circular arc to be inserted may be suitably set in accordance with the shape of the intersection.

The basic equation of the clothoid curve is given as follows:

$$R \times L = A^2 \qquad (1)$$

Here, "L" is a curve length from the start point (clothoid start point) to an arbitrary position P in the intersection, "R" is a radius of curvature at the arbitrary point P, and "A" is a clothoid parameter (constant). When the clothoid curve is uniquely determined, the corresponding clothoid parameter is uniquely determined. In the processing in step S23, the controller 20 draws the clothoid curve passing the start point and the end point of the predicted track, and calculates its clothoid parameter. Specifically, the controller 20 draws the clothoid curve passing the start point and the end point of the predicted track while changing the clothoid parameter A, and outputs the clothoid parameter A of the obtained clothoid curve. Thus, the predicted track 102 shown in FIGS. 4A and 4B as examples may be obtained. When the clothoid curve is calculated, the processing returns to the main routine shown in FIG. 2.

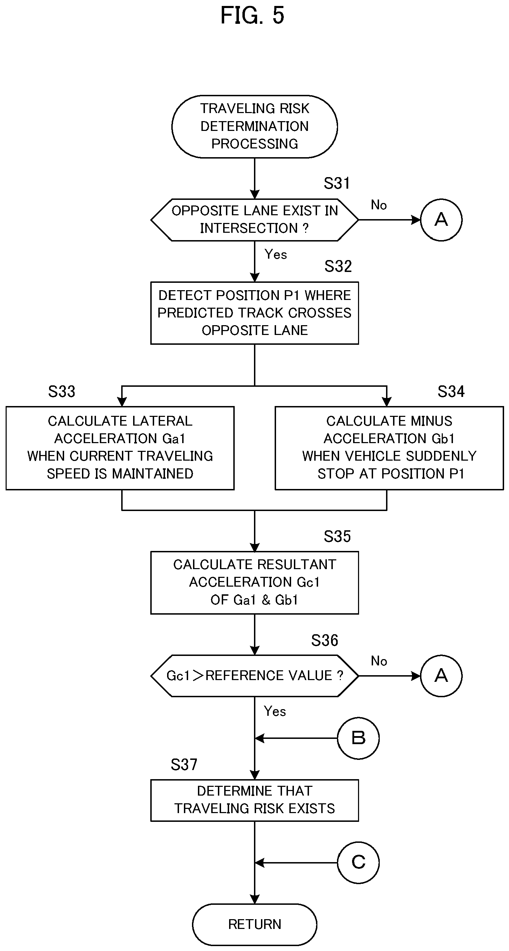

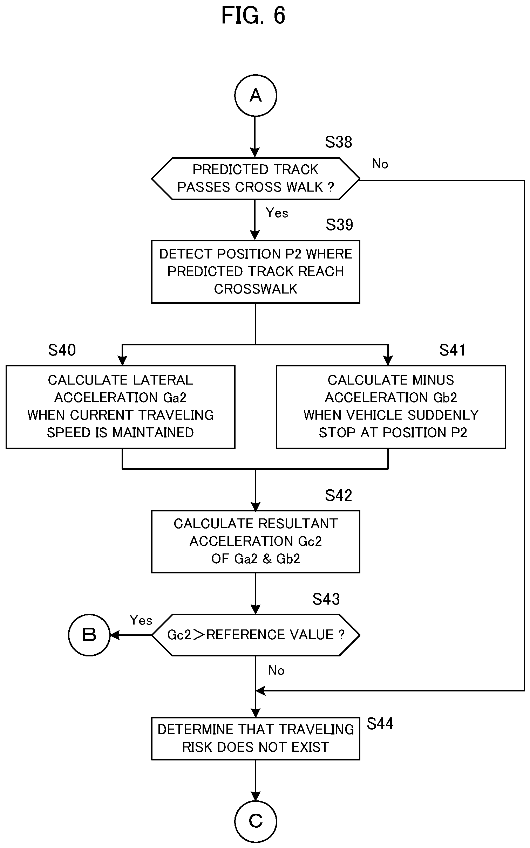

Next, the controller 20 executes the traveling risk determination processing (step S14). FIGS. 5 and 6 are flowcharts of the traveling risk determination processing. In FIG. 5, first the controller 20 determines whether or not an opposite lane exists in the intersection, based on the road information around the intersection (step S31). When no opposite lane exists (Step S31: No), the processing goes to step S38.

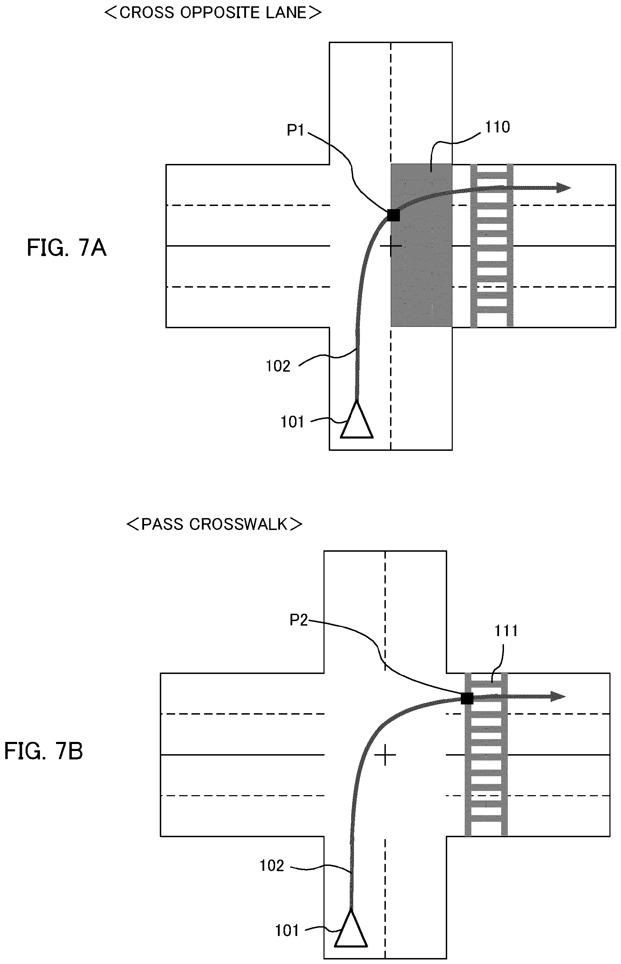

In contrast, when an opposite lane exists (step S31: Yes), the controller 20 detects the determination position P1 where the predicted track crosses the opposite lane (step S32). FIG. 7A shows an example of the determination position P1. In the example of FIG. 7A, the controller 20 detects the determination position P1 where the predicted track 102 crosses the opposite lane 110.

Next, the controller 20 calculates the lateral acceleration generated on the vehicle at the determination position P1 when the current traveling speed is maintained (step S33). The lateral acceleration generated on the vehicle at the determination position P1 on the predicted track 102 is calculated by the following equation:

$$Ga1 = (Current\ speed)^2 \times A^2\ /\ L \qquad (2)$$

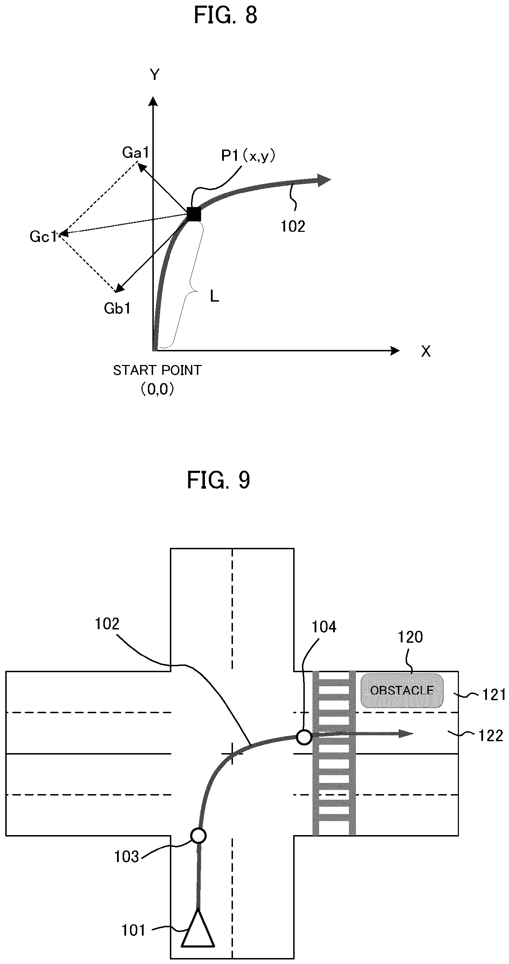

Here, "A" is the clothoid parameter obtained in step S24 of the track prediction processing, and "L" is a traveling distance from the start point on the predicted track 102 to the determination position P1. FIG. 8 shows the acceleration at the determination position P1. As shown in FIG. 8, the lateral acceleration Ga1 is a vector perpendicular to the traveling direction of the vehicle at the determination position P1.

Also, the controller 20 calculates minus acceleration Gb1 generated on the vehicle when the vehicle suddenly stops at the determination position P1 (step S34). Specifically, the controller 20 calculates the minus acceleration Gb1 necessary to stop the vehicle (i. e. , decrease the speed to 0) at the determination position P1 based on the traveling speed of the vehicle, the distance from the start point on the predicted track 102 to the determination point P1 and the braking characteristic of the vehicle. The minus acceleration may be calculated in advance in accordance with the traveling speed of the vehicle, the distance to the determination position P1 and the vehicle weight and stored in a table, and may be obtained by referring to the table. As shown in FIG. 8, the minus acceleration Gb1 is a vector directed to the direction opposite to the traveling direction of the vehicle at the determination position P1.

Then, the controller 20 calculates the resultant acceleration Gc1 of the lateral acceleration Ga1 and the minus acceleration Gb1 (step S35). Specifically, as shown in FIG. 8, the controller 20 calculates the resultant vector Gc1 of the lateral acceleration Ga1 and the minus acceleration Gb1 at the determination position P1 to calculate the resultant acceleration Gc1. Here, the resultant acceleration Gc1 is calculated as an index for total evaluation of the risk by the lateral acceleration Ga1 and the risk by the minus acceleration Gb1. By using the lateral acceleration Ga1, it is possible to determine the risk in view of whether or not the vehicle can stably travel in the intersection. By using the minus acceleration Gb1, it is possible to determine the risk in view of whether or not the vehicle can safely stop if an oncoming vehicle comes in the intersection.

Next, the controller 20 determines whether or not the calculated resultant acceleration Gc1 is larger than a reference value determined in advance (step S36). When the resultant acceleration Gc1 is not larger than the reference value (step S36: No), the processing goes to step S38. Meanwhile, when the resultant acceleration Gc1 is larger than the reference value (step S36: Yes), the controller 20 determines that traveling risk exists (step S37). Then, the processing returns to the main routing shown in FIG. 2. The reference value is determined in advance based on information obtained from experiments using vehicles and situations of accidents actually occurred. The reference value may be altered in accordance with the road surface situation, the road gradient, the type of the own vehicle (small car or large car).

When it is determined in step S31 that no opposite lane exists, or when it is determined in step S36 that the resultant acceleration Gc1 is not larger than the reference value, the processing goes to step S38 shown in FIG. 6. In step S38, the controller 20 determines whether or not the predicted track passes the pedestrian crossing, based on the road information around the intersection. When the predicted track does not pass the pedestrian crossing (step S38:

No), the controller 20 determines that no risk exists (step S44), and the processing returns to the main routine in FIG. 2.

Meanwhile, when the predicted track passes the pedestrian crossing (step S38: Yes), the controller 20 detects the determination position P2 where the predicted track reaches the pedestrian crossing (step S39). FIG. 7B shows an example of the determination position P2. In the example of FIG. 7B, the controller 20 detects the determination position P2 where the predicted track 102 crosses the pedestrian crossing 111. In this embodiment, the position where the predicted track crosses the opposite lane and the pedestrian crossing are determined as the determination positions, since at those positions the possibility of colliding with other movable bodies is relatively high around the intersection. However, not limited to this, a two-wheeled vehicle lane in which the possibility of colliding with other movable bodies is also relatively high may be set to the determination position.

Next, the controller 20 calculates the lateral acceleration Ga2 generated on the vehicle at the determination position P2 when the current traveling speed is maintained (step S40). Specifically, the controller 20 calculates the lateral acceleration Ga2 generated on the vehicle at the determination position P2 on the predicted track 102 by the aforementioned equation (2), similarly to the lateral acceleration Ga1.

Also, the controller 20 calculates the minus acceleration Gb2 generated on the vehicle when the vehicle suddenly stops at the determination position P2 (step S41). Specifically, similarly to the minus acceleration Gb1, the controller 20 calculates the minus acceleration Gb2 necessary to stop the vehicle at the determination position P2 based on the traveling speed of the vehicle, the distance from the start point to the determination position P2 on the predicted track 102 and the braking characteristic of the vehicle.

Then, similarly to the aforementioned resultant acceleration Gc1, the controller 20 calculates the resultant acceleration Gc2 of the lateral acceleration Ga2 and the minus acceleration Gb2 (step S42). Here, the resultant acceleration Gc2 is calculated as an index for total evaluation of the risk by the lateral acceleration Ga2 and the risk by the minus acceleration Gb2. By using the lateral acceleration Ga2, it is possible to determine the risk in view of whether or not the vehicle can stably travel in the intersection. By using the minus acceleration Gb2, it is possible to determine the risk in view of whether or not the vehicle can safely stop if pedestrians are walking on the pedestrian crossing.

Next, the controller 20 determines whether or not the resultant acceleration Gc2 thus calculated is larger than the reference value determined in advance (step S43). When the resultant acceleration Gc2 is not larger than the reference value (step S43: No), the controller 20 determines that traveling risk does not exist (step S44). Meanwhile, when the resultant acceleration Gc2 is larger than the reference value (step S43: Yes), the processing goes to step S37, and the controller 20 determines that traveling risk exists. Then, the processing returns to the main routing shown in FIG. 2. Then, the processing returns to the main routine in FIG. 2.

When the traveling risk determination processing determines that traveling risk exists, the controller 20 outputs warning to notify the driver of danger (step S15). This warning is made by sound, light, vibration or combination thereof. Then, the warning processing ends.

As described above, the warning processing of the embodiment predicts the track that the vehicle turns left or right at the constant speed in the intersection, and determines the traveling risk of the vehicle which travels the track. Also, if it is determined that traveling risk exists, warning is issued. Therefore, it is possible to appropriately notify the driver of the risk when the vehicle travels in the intersection.

[Modified Examples]

Various modified examples of the above embodiment will be described below. The following modified examples may be appropriately applied in combination.

(Modified Example 1)

While the above embodiment is described by an example in which the vehicle turns right in the intersection, the present invention is applicable to the case in which the vehicle turns left in the intersection. Also, the present invention is similarly applicable to the case in which the intersection has a complicated shape such as a three-forked or five-forked road and the vehicle turns left or right in diagonally forward or backward direction.

(Modified Example 2)

The above embodiment is described on the premise that the track that the vehicle travels after turning right in the intersection is determined. However, if there are plural tracks on the road after the left/right turn and the vehicle can travel any one of those tracks, the controller 20 may set the end point of the predicted track on each of those tracks to calculate the predicted tracks and determine the risk for each of the predicted tracks. In this case, the controller 20 may issue the warning if any of the predicted tracks is determined to have the risk. Instead, the controller 20 may determine the risk for the predicted track of smallest turn and issue the warning based on the determination result.

If there are plural lanes on the road after the left/right turn and it is found that an obstacle exists on a certain lane based on the peripheral traffic information acquired by the obstacle detection unit 32 using the road-to-vehicle or vehicle-to-vehicle communication, camera or Lidar, the controller may except the lane from the objects of calculating the predicted track. For example, as shown in FIG. 9, when there are two lanes 121 and 122 on the road after the right turn, but the obstacle 120 exists on the lane 121 and the vehicle cannot run the lane 121, the controller 20 may set the end point only on the lane 122 to calculate the predicted track and determine the risk. The obstacle in this case includes a mobile object, such as other vehicle and pedestrian, and roadworks.

If there are plural lanes on which no obstacle exists, the controller 20 may set the end point on each of the lanes to calculate the predicted tracks and perform the risk determination for each of the predicted tracks, as described above. In this case, if there is one predicted track having the traveling risk, the controller 20 may issue the warning. Instead, the controller 20 may perform the risk determination for the predicted track of smallest turn, out of the predicted tracks of the plural lanes, and may perform the risk determination for the predicted track of smallest turn to issue the warning based on the determination result.

(Modified Example 3)

In the above embodiment, the resultant acceleration Gc1 or Gc2 of the lateral acceleration Ga1 or Ga2 and the minus acceleration Gb1 or Gb2 is calculated in steps S35 and S42 of the traveling risk determination processing, and the traveling risk is determined by comparing the resultant acceleration with the reference value. Instead, the lateral acceleration and the minus acceleration may be compared with the corresponding reference values, respectively. In that case, the controller 20 may determine that traveling risk exists when at least one of the lateral acceleration and the minus acceleration is larger than the reference value.

In steps S34 and S41 of the traveling risk determination processing, the minus acceleration until the vehicle stops (i.e., the traveling speed becomes 0) is calculated. Instead, the minus acceleration of decelerating the vehicle to the speed that does not cause serious accident may be calculated. In that case, a deceleration target speed for oncoming vehicles and pedestrians maybe set separately. For example, the controller 20 may calculate the minus acceleration of decelerating the vehicle to substantially stop the vehicle for pedestrians, and calculate the minus acceleration of decelerating the vehicle to a certain slow speed for oncoming vehicles.

(Modified Example 4)

In the above embodiment, regardless of whether or not there actually exist oncoming vehicles on the opposite lane orpedestrians on the crosswalk, the controller 20 determines the traveling risk at the determination position P1 based on the opposite lane and the determination position P2 based on the crosswalk. Instead, if it is possible to detect actual existence of oncoming vehicles or pedestrians by the obstacle detection of the obstacle detection unit 32 using the road-to-vehicle or vehicle-to-vehicle communication, camera or Lidar, the determination of the traveling risk may be performed only when oncoming vehicles or pedestrians actually exist. Namely, when it is determined, based on the peripheral traffic information and/or the obstacle detection processing, that there is no mobile object such as an oncoming vehicle and pedestrian on the predicted track obtained by the track prediction processing, the traveling risk determination processing and the warning may be omitted.

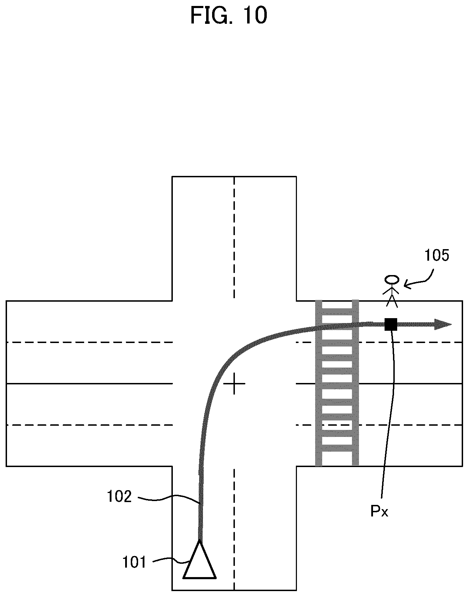

On the contrary, when it is detected, based on the peripheral traffic information and/or the obstacle detection processing, that there exists a mobile object such as other vehicle or pedestrian at the place inside or near the intersection and other than the opposite road and the crosswalk, the controller 20 may set the position of the other vehicle or pedestrian thus detected to the determination position and determine the traveling risk at the determination position. For example, as shown in FIG. 10, when a pedestrian 105 is detected at the position ahead of the crosswalk on the road after the vehicle turns right, the controller 20 may set the position of the pedestrian 105 to the determination position Px. Then, similarly to the above traveling risk determination processing, the controller 20 may determine the traveling risk by calculating the lateral acceleration and the minus acceleration at the determination position Px and issue the warning if necessary. Also, when other vehicle or pedestrian is actually detected based on the peripheral traffic information and/or the obstacle detection and the traveling risk determination processing determines that the traveling risk exists, the vehicle may be automatically braked or stopped in addition to issuing the warning.

(Modified Example 5)

In the above track prediction processing, the clothoid curve is used as the transition curve indicating the track of the vehicle in the intersection. However, the application of the present invention is not limited to this, and it is possible to use other known transition curve such as a Bloss transition curve, a sinusoidal curve, a sine half-wavelength diminishing curve, and a cubic curve.

Also, kinds and characteristics (parameters) of the transition curve used in the track prediction processing may be altered based on the tendency of the driver's traveling track. For the intersection of the same shape, the actual traveling tracks may be different dependently upon habit or traveling tendency of the drivers . For example, there exist drivers of various traveling tendency such as (a) a driver who turns with relatively large turn, (b) a driver who turns with relatively small turn, (c) a driver who enters the intersection at relatively high speed and then turns with understeer, and (d) a driver who enters the intersection at relatively low speed, turns the vehicle direction early and then goes out the intersection almost straight. Therefore, by preparing transition curves or characteristics adapted to various traveling tendency as described above and altering the kinds and/or characteristics of the transition curve used in the track prediction processing according to the traveling tendency of the driver, it becomes possible to generate the predicted track adapted to the actual traveling tendency of the driver.

As an example of an actual method, options of the traveling tendency such as the above (a) to (d) are presented to the driver, and the driver may choose the one that matches his or her traveling tendency. Then, the controller 20 may execute the track prediction processing by using at least one of the transition curve and the characteristic (parameter) prepared in advance to match the chosen traveling tendency. In another example, instead of making the driver choose the traveling tendency, the traveling tendency of the driver turning in the intersection may be analyzed by referring to the actual traveling history data of the driver, and the transition curve and the characteristic may be altered based on the traveling tendency thus obtained. In this case, it is desirable to collect and analyze traveling history data of as many intersections as possible to extract the traveling tendency of the driver at the left/right turn, and alter the kind or characteristic of the transition curve based on the traveling tendency thus obtained. By this, the predicted track adapted to the driver may be obtained, not only for the intersections that the driver has actually traveled in the past, but also the intersection that the driver travels for the first time.

(Modified Example 6)

In the above embodiment, the position where the predicted track crosses the oncoming lane or the crosswalk is used as the determination position for determining the traveling risk. In the Modified Example 4, the position of other mobile object detected based on the peripheral traffic information or the obstacle detection is used as the determination position. In those cases, the determination position may be corrected based on the driver information, e.g., the driving skill level. For the driver of driving skill level lower than a predetermined level, safety may be enhanced by the correction of moving the determination position to the vehicle side. The driving skill level of the driver may be presumed by analyzing the past traveling history data of the driver. Also, the driver may evaluate and set the driving skill level by himself or herself. As the driver information, as information indirectly indicating the driving skill level, attributes (age, sex, driving history. etc.) of the driver or traveling tendency of the driver may be used. Instead of determining correction amount of the determination position based on the driver information, the correction amount of the determination position may be set by the driver. For example, the driver who does not have confidence may correct the determination position by moving it a predetermined distance (e.g., several meters) from the normal position to the vehicle side. When approach of an emergency vehicle is detected based on the road-to-vehicle or vehicle-to-vehicle communication or the siren sound before or after entering the intersection, the determination position may be moved to the vehicle side.

Instead of correcting the determination position where the traveling risk is determined as described above, the reference value used for the determination of the traveling risk may be corrected. Specifically, the reference value used in the traveling risk determination processing (see. steps S36, S43) is corrected in accordance with the driver information. For example, as to the driver whose driving skill level is presumed to be lower than a certain level, the reference value lower than the normal level is used to determine the traveling risk. Thus, the warning is easily issued to the drivers of low driving skill level.

(Modified Example 7)

In the above embodiment, the navigation device 1 loaded on the vehicle performs the traveling risk determination processing at the time of turning left or right at an intersection and outputs warning. Not limited to this, the system may be configured by an on-vehicle device including the display unit 40 or the sound output unit 50 outputting the warning, and an external device (e. g. , server). Specifically, the on-vehicle device transmits various information to the server via a network. The server executes at least one of the track prediction processing and the traveling risk determination processing, and transmits the processing result to the on-vehicle device. Namely, the on-vehicle device and the external device may execute the traveling risk determination processing at the time of turning left/right in the intersection in cooperation. The processing executed by the on-vehicle device and the server maybe suitably determined. Further, the navigation device 1 may be mounted on the vehicle or may be a mobile terminal device.

DESCRIPTION OF REFERENCE NUMBERS

[0082]

| | |
|---|---|
| 1 | Navigation device |
| 22 | CPU |
| 32 | Obstacle detection unit |
| 101 | Own vehicle mark |
| 102 | Predicted track |
| 103 | Start point |
| 104 | End point |
| P1, P2, Px | Determination position |

**Claims**

1. A determination device which determines traveling risk before a mobile object actually turns left or right in an intersection, comprising:

   a first acquisition unit configured to acquire speed information associated with a moving speed of the mobile object;
   a second acquisition unit configured to acquire intersection information including a shape of the intersection;
   a prediction unit configured to predict a traveling track of the mobile object traveling in the intersection based on the speed information and the intersection information; and
   a risk determination unit configured to determine the traveling risk based on the traveling track.

2. The determination device according to claim 1, wherein the prediction unit sets a start point and an end point of the traveling track based on the speed information and the intersection information, and predicts the traveling track between the start point and the end point as a curve including a transition curve.

3. The determination device according to claim 2, wherein the prediction unit sets the positions of the start point and the end point specified based on the intersection information after correcting based on the speed information.

4. The determination device according to claim 3, wherein the prediction unit corrects the positions of the start point and the end point to be farther from the intersection as the speed information indicates a higher speed.

5. The determination device according to any one of claims 2 to 4, wherein the transition curve is a clothoid curve.

6. The determination device according to any one of claims 1 to 5, further comprising a setting unit configured to set a determination position on the traveling track, wherein the determination unit predicts a lateral acceleration generated in a lateral direction of the mobile object at the determination position, and determines the traveling risk of the mobile object turning left or right based on the lateral acceleration.

7. The determination device according to claim 6, wherein the setting unit sets a position where an opposite lane or a crosswalk in the intersection crosses the traveling track as the determination position.

8. A determination method which determines travelingrisk before a mobile object actually turns left or right in an intersection, comprising:

   a first acquisition process configured to acquire speed information associated with a moving speed of the mobile object;
   a second acquisition process configured to acquire intersection information including a shape of the intersection;
   a prediction process configured to predict a traveling track of the mobile object traveling in the intersection based on the speed information and the intersection information; and
   a risk determination process configured to determine the traveling risk based on the traveling track.

9. A program executed by a determination device which includes a computer and determines traveling risk before a mobile object actually turns left or right in an intersection, the program causing the computer to function as:

a first acquisition unit configured to acquire speed information associated with a moving speed of the mobile object;
a second acquisition unit configured to acquire intersection information including a shape of the intersection;
a prediction unit configured to predict a traveling track of the mobile object traveling in the intersection based on the speed information and the intersection information; and
a risk determination unit configured to determine the traveling risk based on the traveling track.

10. A storage medium storing the program according to claim 9.

# FIG. 1

# FIG. 2

```
        ┌──────────────────┐
        │     WARNING      │
        │   PROCESSING     │
        └──────────────────┘
                 │
                 │               S11
                 ▼
        ┌──────────────────────────┐
        │  PREDICT LEFT/RIGHT TURN │
        └──────────────────────────┘
                 │
                 │               S12
         No      ▼
        ┌─────────────────────────┐
        │    LEFT/RIGHT TURN ?    │
        └─────────────────────────┘
                 │ Yes
                 │               S13
                 ▼
        ┌──────────────────────────┐
        │    TRACK PREDICTION      │
        │      PROCESSING          │
        └──────────────────────────┘
                 │
                 │               S14
                 ▼
        ┌──────────────────────────┐
        │    TRAVELING RISK        │
        │    DETERMINATION         │
        │    PROCESSING            │
        └──────────────────────────┘
                 │
                 │               S15
                 ▼
        ┌──────────────────────────┐
        │     OUTPUT WARNING       │
        └──────────────────────────┘
                 │
                 ▼
        ┌──────────────────┐
        │       END        │
        └──────────────────┘
```

# FIG. 3

```
         ┌─────────────────────┐
         │  TRACK PREDICTION   │
         │     PROCESSING      │
         └─────────────────────┘
                    │
                    ▼                S21
        ┌───────────────────────────┐
   No   │  REACH PREDETERMINED      │
  ◄─────│     DISTANCE FROM         │
        │     INTERSECTION ?        │
        └───────────────────────────┘
                    │
                   Yes
                    │               S22
                    ▼
        ┌───────────────────────────┐
        │  ACQUIRE TRAVELING SPEED  │
        └───────────────────────────┘
                    │
                    │               S23
                    ▼
        ┌───────────────────────────┐
        │   SET START POINT & END   │
        │ POINT OF PREDICTED TRACK  │
        └───────────────────────────┘
                    │
                    │               S24
                    ▼
        ┌───────────────────────────┐
        │    CALCULATE CLOTHOID     │
        │   CURVE PASSING START     │
        │     POINT & END POINT     │
        └───────────────────────────┘
                    │
                    ▼
         ┌─────────────────────┐
         │       RETURN        │
         └─────────────────────┘
```

<STANDARD SPEED>

FIG. 4A

<HIGHER THAN STANDARD SPEED>

FIG. 4B

# FIG. 5

```
        ┌─────────────────────┐
        │   TRAVELING RISK    │
        │   DETERMINATION     │
        │    PROCESSING       │
        └─────────────────────┘
                  │
                  ▼              S31
        ╱─────────────────────╲   No
       ╱  OPPOSITE LANE EXIST IN ╲ ────▶ (A)
       ╲     INTERSECTION ?      ╱
        ╲─────────────────────╱
                  │ Yes
                  ▼              S32
        ┌─────────────────────┐
        │ DETECT POSITION P1 WHERE │
        │ PREDICTED TRACK CROSSES  │
        │    OPPOSITE LANE         │
        └─────────────────────┘
```

S33

CALCULATE LATERAL ACCELERATION Ga1 WHEN CURRENT TRAVELING SPEED IS MAINTAINED

S34

CALCULATE MINUS ACCELERATION Gb1 WHEN VEHICLE SUDDENLY STOP AT POSITION P1

S35

CALCULATE RESULTANT ACCELERATION Gc1 OF Ga1 & Gb1

S36

Gc1 > REFERENCE VALUE ?  No ──▶ (A)

Yes

(B)

S37

DETERMINE THAT TRAVELING RISK EXISTS

(C)

RETURN

## FIG. 6

A

S38

PREDICTED TRACK
PASSES CROSS WALK ?   —No→

↓ Yes

S39

DETECT POSITION P2 WHERE
PREDICTED TRACK REACH
CROSSWALK

S40

CALCULATE LATERAL
ACCELERATION Ga2
WHEN CURRENT TRAVELING
SPEED IS MAINTAINED

S41

CALCULATE MINUS
ACCELERATION Gb2
WHEN VEHICLE SUDDENLY
STOP AT POSITION P2

S42

CALCULATE RESULTANT
ACCELERATION Gc2
OF Ga2 & Gb2

S43

B  ←Yes—  Gc2 > REFERENCE VALUE ?

↓ No

DETERMINE THAT TRAVELING   S44
RISK DOES NOT EXIST

C

<CROSS OPPOSITE LANE>

FIG. 7A

<PASS CROSSWALK>

FIG. 7B

# FIG. 8

# FIG. 9

## FIG. 10

## INTERNATIONAL SEARCH REPORT

International application No.

PCT/JP2018/029237

| A. CLASSIFICATION OF SUBJECT MATTER |
|---|
| Int.Cl. G08G1/16(2006.01)i, B60R21/00(2006.01)i, B60W30/095(2012.01)i, B60W30/14(2006.01)i, G01C21/26(2006.01)i |

According to International Patent Classification (IPC) or to both national classification and IPC

| B. FIELDS SEARCHED |
|---|
| Minimum documentation searched (classification system followed by classification symbols)<br>Int.Cl. G08G1/16, B60R21/00, B60W30/095, B60W30/14, G01C21/26 |

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2007-164339 A (TOYOTA CENTRAL R&D LABS., INC.) 28 June 2007, paragraphs [0022]-[0067], fig. 5, 6, 9, 11, 12, etc. (Family: none) | 1–5, 8–10<br>6<br>7 |
| Y | JP 2016-7955 A (TOYOTA MOTOR CORP.) 18 January 2016, paragraphs [0039]-[0041], etc. (Family: none) | 6 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 September 2018 (20.09.2018) | 09 October 2018 (09.10.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010105453 A